# EUROPÄISCHE PATENTSCHRIFT

(11) **EP 1 749 924 B1**
(45) Veröffentlichungstag und Bekanntmachung des Hinweises auf die Patenterteilung: **14.11.2007**
(21) Anmeldenummer: 05017006.7
(22) Anmeldetag: 04.08.2005
(51) Int. Cl.: D21F 1/00

(54) **Formiersieb für den Einsatz in einer Papiermaschine sowie Verfahren zur Herstellung eines solchen Formiersiebes**
Forming fabric for a papermaking machine and method for manufucturing such a forming fabric
Toile de formation pour machine à papier et procédé pour fabriquer une telle toile

(43) Veröffentlichungstag der Anmeldung: 07.02.2007
(73) Patentinhaber: Heimbach GmbH & Co. KG, 52353 Düren (DE)
(72) Erfinder: Best, Walter, Dr., 52351 Düren (DE); Molls, Christian, 52070 Aachen (DE); Wales, Paul, Fermoy, Co.Cork (IE)
(74) Vertreter: Paul, Dieter-Alfred

(56) Entgegenhaltungen:
- EP-A- 1 359 251
- US-A- 4 446 187
- US-A- 5 888 915

## Beschreibung

Die Erfindung betrifft ein Formiersieb für den Einsatz in der Blattbildungspartie einer Papiermaschine gemäß dem Oberbegriff des Anspruchs 1, sowie ein Verfahren zur Herstellung eines Formiersiebes gemäß dem Oberbegriff des Anspruchs 16.

Formiersiebe sind lange und breite Bänder, die im ersten Teil einer Papiermaschine, der sogenannten Blattbildungspartie, unter Bildung eines ebenen Obertrums umlaufen. Am Anfang des Obertrums wird die zuvor aufbereitete Faserpulpe auf das Formiersieb aufgebracht und durch das Formiersieb hindurch entwässert, so dass sich nach und nach eine Papierbahn mit noch hohem Flüssigkeitsgehalt bildet. In nachfolgenden Partien der Papiermaschine wird die Papierbahn mechanisch und thermisch weiter entwässert.

Als Formiersiebe kommen in der Regel ein- oder mehrlagige Gewebe zum Einsatz. Ein Gewebe - oder auch ein Gewirke - erhält seine Eigenstabilität bzw. Diagonalstabilität dadurch, dass sich kreuzende Fäden unter Bildung eines Bindungsmusters miteinander eingebunden werden. Insbesondere bei hohen Beanspruchungen, wie sie in der Papiermaschine auftreten, reicht die Eigenstabilität des textilen Flächengebildes nicht aus, um für einen einwandfreien und stabilen Umlauf des Formiersiebes durch die Blattbildungspartie zu sorgen. Deshalb sind zusätzliche Maßnahmen getroffen worden, um die Dimensionsstabilität, insbesondere die Diagonalsteifigkeit solcher textilen Flächengebilde zu verbessern.

Eine dieser Maßnahmen besteht darin, die Fäden an den Kreuzungspunkten miteinander zu verkleben, indem die Gewebestruktur mit klebenden Polymeren ausgerüstet wird. Dieses Verfahren ist kostenintensiv, da der Auftrag der Dispersion sehr gleichmäßig erfolgen muß und die Trocknung sehr zeit- und energieaufwendig ist. Außerdem wird die Permeabilität erheblich verringert, was den Blattbildungsprozeß beeinträchtigt. Ein weiterer Nachteil besteht darin, dass die durch dieses Verfahren bedingte Verklebung an allen Kreuzungspunkten zu einer versteifung führt, wie sie häufig nicht erwünscht ist.

In der US 5,888,915 A ist zu der Verbesserung der Dimensionsstabilität solcher textilen Flächengebilde vorgeschlagen, Bikomponentenfäden zu verwenden, bei denen die Schmelztemperatur der Außenhülle geringer ist als die des Kerns. Ein mit solchen Bikomponentenfäden ausgerüstetes Gewebe, Gewirke oder Fadengelege wird anschließend in einem Durchlaufofen auf eine Temperatur erhitzt, die oberhalb der Schmelztemperatur der Außenhülle der Bikomponentenfäden, aber unterhalb der Schmelztemperatur des Kerns dieser Fäden liegt, so dass die Hülle schmilzt und auf diese Weise an den Kreuzungspunkten eine Schmelz- bzw. Klebeverbindung mit andere Fäden hergestellt wird.

Mit Hilfe dieses Verfahrens lassen sich Formiersiebe mit guter Dimensionsstabilität herstellen. Allerdings ist die Herstellung kostenaufwendig, da die Bikomponentenfäden teuer sind und die Erhitzung des gesamten Formiersiebes in einem Durchlaufofen energieaufwendig ist.

Daneben sind Formiersiebe mit oder bestehend aus einem textilen Flächengebilde bekannt, das aus einem Fadengelege gebildet ist, bei denen die Fäden nicht untereinander eingebunden, also nicht miteinander verwebt oder vermascht sind. Vielmehr werden auf eine Lage Längsfäden, die parallel und im Abstand zueinander verlaufen, Querfäden ebenfalls parallel und im Abstand zueinander aufgelegt und dann die Längs- mit den Querfäden verbunden. Erst hierdurch erhält das Fadengelege Eigenstabilität. Die Verbindung kann mit dem Verfahren nach der US 5,888,915 A unter Verwendung von Bikomponentenfäden geschehen.

Die Nachteile des oben genannten Verfahrens werden durch ein Verfahren beseitigt, das der EP 1 359 251 A1 zu entnehmen ist. Bei diesem Verfahren werden die Längs- und Querfäden an Kreuzungspunkten infolge auf diese Kreuzungspunkte beschränkten Erhitzens auf Schmelztemperatur miteinander verschmolzen. Das Erhitzen kann dabei punktuell mittels Laser-, Hochfrequenz- und/oder Induktionsenergie erfolgen. Alternativ dazu kann aber die Energie auch flächig aufgebracht werden, wenn die Kreuzungspunkte zuvor mit einem die Absorption der Energie fördernden Zusatzmittel versehen werden, die die Energieaufnahme trotz flächiger Aufbringung auf die Kreuzungspunkte konzentriert, so dass nur diese auf Schmelztemperatur erhitzen und folglich miteinander verschmelzen. Das Zusatzmittel sollte bei Anwendung eines Lasers ein Licht absorbierender Farbstoff, z.B. schwarze Farbe oder eine lichtaktive Substanz sein. Das Zusatzmittel kann zwischen die Fäden oder auf die Fäden appliziert werden. Statt dessen wird auch vorgeschlagen, das Zusatzmittel dem Fadenmaterial während des Extrusionsvorgangs, zuzugeben.

Daneben ist aus der US 4,446,187 A eine Vorrichtung zur Herstellung einer Papiermaschinenbespannung bekannt, die zwei Spannwalzen aufweist, auf die die endlos gemachte Papiermaschinenbespannung aufspannbar ist. Der Spanneinrichtung ist eine Lasereinrichtung mit einem Laserkopf zugeordnet, und zwar derart, dass ein Laserstrahl auf die Papiermaschinenbespannung in aufgespanntem Zustand ausrichtbar ist. Dabei kann zwischen Spanneinrichtung und Lasereinrichtung eine Relativbewegung erzeugt werden. Die Papiermaschinenbespannung ist mit einer Folie überzogen, in die mittels der Lasereinrichtung eine Vielzahl von Löchern erzeugt werden, um hierdurch die Papiermaschinenbespannung flüssigkeitsdurchlässig zu machen.

Der Erfindung liegt die Aufgabe zugrunde, ein Formiersieb der eingangs genannten Art kostengünstiger herzustellen, vorzugsweise ohne dass strukturelle Veränderungen hervorgerufen werden. Eine weitere Aufgabe besteht darin, ein für die Herstellung geeignetes Verfahren hierzu bereitzustellen.

Die erste Aufgabe wird erfindungsgemäß durch ein Formiersieb gelöst, bei dem das Flächengebilde sich kreuzende erste und zweite Fäden aufweisen, wobei nur ein Teil der Längs- und/oder Querfäden erste Fäden sind und die ersten Fäden die Eigenschaft aufweist, Laserenergie zu absorbieren und durch absorbierte Laserenergie zumindest an der Oberfläche auf Schmelztemperatur bringbar zu sein, bei dem die zweiten Fäden gar keine oder weniger Laserenergie absorbieren als die ersten Fäden, und bei dem erste und zweite Fäden zumindest an einem Teil ihrer Kreuzungspunkte miteinander verschmolzen sind. Dabei ist es für viele Fälle ausreichend, wenn nur ein Teil der ersten und zweiten Fäden und diese nur an einem Teil ihrer Kreuzungspunkte miteinander verschweißt sind.

Grundgedanke der Erfindung ist es also, bei einem Formiersieb für einen Teil der Fäden besondere Fäden zu verwenden, die sich dadurch auszeichnen, dass sie Laserlicht absorbieren. Auf diese Weise kann das textile Flächengebilde zusätzlich dadurch stabilisiert werden, dass die ersten Fäden mittels eines Lasers auf Schmelztemperatur erhitzt werden und damit zumindest an einem Teil der Kreuzungspunkte - wenn nicht an allen - eine Schmelzverbindung mit den zweiten Fäden hergestellt wird, die Laserlicht nicht oder nur wenig absorbieren. Diese Art der Herstellung der Schmelzverbindung ist wesentlich weniger zeit- und energieaufwendig als die bekannten Verfahren, zumal die ersten Fäden selbst nur geringe Mehrkosten erfordern. Dabei besteht ein weiterer Vorteil darin, dass die Dimensionsstabilität den jeweiligen Anforderungen individuell angepaßt werden kann, indem die Anzahl der ersten Fäden sowie der Kreuzungspunkte, an denen eine Verschweißung bzw. Verschmelzung durchgeführt wird, entsprechend variiert wird. In manchen Fällen ist nämlich auch ein zu steifes und deshalb ungenügend anpassungsfähiges Formiersieb von Nachteil.

In Ausbildung der Erfindung ist vorgesehen, dass die Fäden ansonsten nicht miteinander verbunden sind, also über die gegenseitige Einbindung der Fäden und deren punktuelle Verschweißung an Kreuzungspunkten keine weitere Verbindung existiert.

Damit die ersten Fäden das Laserlicht absorbieren können, können sie ein Additiv enthalten, das die Absorptionsfähigkeit für Laserlicht bewirkt. Beispiele für solche Additive sind NIR-aktive - also im Nahen Infrarot wirksame - Substanzen, die z.B. im Bereich der Wellenlängen 808 nm, 940 nm, 980 nm oder 1064 nm absorbieren. Hierfür kommen beispielsweise Kohlenstoff oder farblose Additive wie Clearweld® von Gentex oder Lumogen® IR von BASF in Frage. Das Additiv erstreckt sich vorzugsweise über die gesamte Länge der ersten Fäden und ist über die Länge und den Querschnitt gleichmäßig verteilt. Dabei kann das Additiv in den ersten Fäden inkorporiert sein und/oder auf die Oberfläche der ersten Fäden aufgetragen sein und/oder an den Kreuzungspunkten zwischen den ersten und zweiten Fäden eingetragen sein. Wenn das Additiv inkorporiert ist, sollten die Gewichtsanteile um 0,10 % bis 2,5 % liegen.

In weiterer Ausgestaltung der Erfindung ist vorgesehen, dass die ersten Fäden Bikomponentenfäden sind, wobei nur eine der beiden Komponenten das Additiv enthält. Bevorzugt sollten die Bikomponentenfäden einen Kern und einen diesen umgebenden Mantel aufweisen, wobei das Additiv dann nur in dem Mantel enthalten ist.

Als Flächengebilde kommen erfindungsgemäß solche in Frage, bei denen sich kreuzende Fäden untereinander eingebunden sind, wie dies beispielsweise bei Geweben und Gewirken der Fall ist. Die ersten Fäden können sich allein in Längsrichtung, allein in Querrichtung oder in beiden Richtungen erstrecken. Vorzugsweise sollten die ersten Fäden Teil der Bindung der Fäden in dem Flächengebilde selbst sein, also nicht zusätzlich in das vorhandene Gewebe, Gewirke etc. eingebracht worden sein, um die gewünschte Fadenverteilung und -struktur nicht zu stören. Dabei ist es sicherlich zweckmäßig, wenn die ersten Fäden in dem Flächengebilde in einem gleichbleibend regelmäßigen Muster verteilt sind.

Die ersten Fäden sind - wenn möglich - vorteilhafterweise derart in das Flächengebilde eingebunden, dass sie nicht bis an die Papierseite des Formiersiebes heranreichen. Sofern das Flächengebilde mehrlagig ausgebildet ist, sollten die ersten Fäden nur in einer innenliegenden und/oder einer walzenseitigen Lage eingebunden sein.

Als Material für die Fäden kommt jede Art von thermoplastischem Material in Frage, das für den jeweiligen Anwendungsfall geeignet ist, also den jeweiligen Umgebungsbedingungen in der Papiermaschine dauerhaft standhält. Aus Kostengründen können zumindest die ersten Fäden, besser noch sämtliche Fäden, als Einkomponentenfäden ausgebildet sein, die zusätzlich faserverstärkt sein können, d.h. einzelne oder alle Fäden können eine Faserverstärkung enthalten.

Formiersiebe haben eine endliche Länge mit über eine Naht verbindbaren Stirnkanten. Im Bereich beider Stirnkanten, d.h. im Nahtbereich, sollten erste Fäden vorhanden sein, die in Querrichtung verlaufen und mit in Längsrichtung verlaufenden zweiten Fäden verschweißt sind. Um dort eine besonders hohe Festigkeit zu erzielen, sollten die ersten Fäden im Nahtbereich in einer höheren Konzentration vorhanden sein als im übrigen Bereich des Formiersiebes und sollten die ersten und zweiten Fäden an möglichst vielen Kreuzungspunkten miteinander verschweißt sein. Die beim Nahtprozeß in die jeweils gegenüberliegende Stirnkante bindungsgerecht eingelegten Längsfäden werden dann mit den ersten Fäden verschmolzen. Hierdurch wird die Möglichkeit eröffnet, den Nahtbereich zu verkürzen, ohne dass hierdurch die Festigkeit der Naht leidet. Der Nahtbereich kann auf diese weise von einer üblichen Ausdehnung in Längsrichtung von z.B. 100 mm auf z.B. 60 mm reduziert werden, d.h. der Nahtbereich kann in Laufrichtung um 20 - 60% verkürzt werden.

Zum Verschweißen sollte ein Laserstrahl verwendet werden, der eine Leistung von 20 bis 200 W, vorzugsweise 50 bis 150 W hat.

Die zweite Aufgabe wird nach der Erfindung durch ein Verfahren gelöst, bei dem bei der Herstellung des Flächengebildes erste und zweite Fäden verwendet werden, wobei die ersten Fäden Laserenergie absorbieren können und für die zweiten Fäden solche Fäden verwendet werden, die gar keine oder weniger Laserenergie absorbieren als die ersten Fäden, und wobei nur für einen Teil der Längs- und/oder Querfäden erste Fäden verwendet werden und erste und zweite Fäden an zumindest einem Teil ihrer Kreuzungspunkte mittels Laserenergie verschmolzen werden.

Die Verschweißung der ersten und zweiten Fäden an den Kreuzungspunkten kann in einem gleichbleibend regelmäßigen Muster, aber auch stochastisch verteilt, geschehen. Dabei besteht die Möglichkeit, dass der Laser in parallele Längsspuren über das Formiersieb geführt wird, wobei Laser und Formiersieb relativ zueinander in Längsrichtung des Formiersiebes bewegt werden, indem entweder der Laser zweidimensional über das stehend aufgespannte Formiersieb bewegt wird oder das Formiersieb sich in Längsrichtung unter dem Laser hinwegbewegt, wobei der Laser zusätzlich seitlich verfahren werden kann. Alternativ dazu besteht die Möglichkeit, dass der Laser in parallelen Querspuren über das Formiersieb entlang eines Querfadens geführt wird. Hierzu kann das Formiersieb abwechselnd weiterbewegt und wieder angehalten werden, so dass der Laser entlang jeden Querfadens, oder auch jeden zweiten, jeden dritten oder jeden zehnten Querfadens geführt wird.

Eine weitere Möglichkeit besteht darin, dass der Laser in diagonaler Richtung über das Formiersieb geführt wird, wobei der Winkel zwischen diagonaler Richtung und Querrichtung so gewählt wird, dass die ersten und zweiten Fäden an möglichst vielen Kreuzungspunkten miteinander verschmolzen werden. Dabei kann der Laser dem Bindungsgratder Gewebebindung folgen. Die Abstände zwischen den Laserspuren können in Längsrichtung je nach der gewünschten Ausbildung ausgewählt werden. Davon abgesehen ist es nicht ausgeschlossen, dass der Laser in spiraligen Spuren über das Formiersieb geführt wird.

Ferner ist nach der Erfindung vorgesehen, dass der Laser derart gesteuert wird, dass er an die für die Verbindung vorgesehenen Kreuzungspunkte von ersten und zweiten Fäden verfahren wird. Zur Verbindung durchstrahlt der Laser zuerst den zweiten Faden, ehe er auf den ersten Faden trifft. Dabei sollte die Konzentration des Additivs in den ersten Fäden und die Energie des Lasers in einem solchen Verhältnis stehen, dass die ersten Fäden nur an der dem Laser zugewandten Oberfläche aufgeschmolzen werden, um die Struktur der Fäden und deren Form nur geringfügig zu beeinträchtigen.

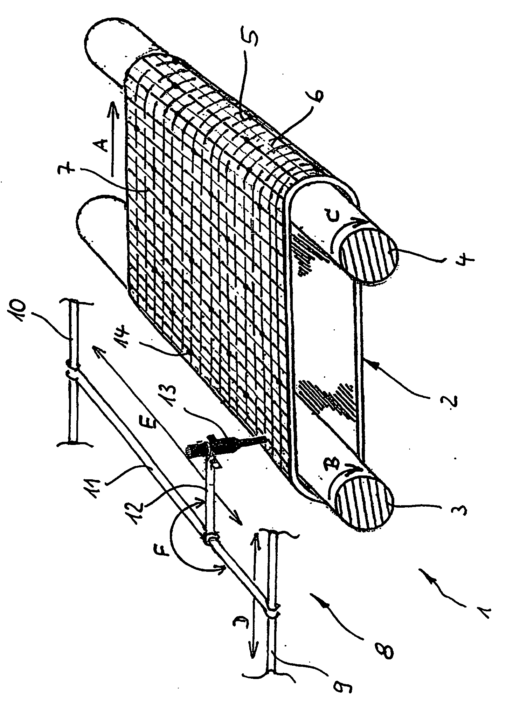

In der Zeichnung ist die Erfindung anhand eines Ausführungsbeispiels näher veranschaulicht. Sie zeigt in einer Schrägansicht eine Vorrichtung 1 zur Teilherstellung des erfindungsgemäßen Formiersiebes 2.

Das Formiersieb 2 ist zuvor in endlicher Länge gewebt worden, und seine Stirnkanten sind dann miteinander vernäht worden, so dass ein endlosees Gebilde entstanden ist. Das Formiersieb 2 ist dann zwischen zwei im Abstand zueinander angeordneten Walzen 3, 4 aufgespannt worden, wobei eine der Walzen derart beweglich geführt ist, dass das Formiersieb 2 eine bestimmte Längsspannung erhält. Zumindest eine der Walzen 3, 4 ist motorisch im Uhrzeigersinn angetrieben. Bei Aktivierung des Antriebs wird das Formiersieb 2 mit einer vorbestimmten Geschwindigkeit in Richtung des Pfeils A bewegt, wobei die Walzen 3, 4 eine Drehbewegung in Richtung der Pfeile B, C ausführen. Es versteht sich, dass die Walzen 3, 4 in einem hier nicht näher dargestellten Vorrichtungsrahmen gelagert sind, in dem auch der Antrieb untergebracht ist.

Das Formiersieb 2 ist in endlicher Länge hergestellt und durch eine die Stirnkanten verbindenden Naht in die gezeigte Endlosform gebracht worden. Das Formiersieb 2 besteht aus einem Gewebe, das in dieser Ausführungsform sich in Laufrichtung (Pfeil A) erstreckende Längsfäden - beispielhaft mit 5 bezeichnet - und senkrecht dazu verlaufende Querfäden - beispielhaft mit 6 bezeichnet - aufweist. Die Längs- und Querfäden 5, 6 sind aus einem für die Verwendung in Formiersieben üblichen thermoplastischem Kunststoff gefertigt und bilden zweite Fäden im Sinne der vorliegenden Beschreibung. Die Längs- und Querfäden 5, 6 sind nach einem bestimmten Bindungsmuster miteinander eingebunden.

Zwischen jeweils zwei zweite Fäden bildenden Querfäden 6 verläuft jeweils ein weiterer Querfaden - beispielhaft mit 7 bezeichnet -, der in der Zeichnung verstärkt dargestellt ist. Die Querfäden 7 sind mit den Längsfäden 5 eingebunden und sind Teil des Bindungsmusters. Sie bilden erste Fäden im Sinne der vorliegenden Beschreibung. Sie enthalten ein Additiv, das sie für Laserenergie absorptionsfähig macht, so dass sie mit Hilfe eines Laserstrahls auf Schmelztemperatur gebracht werden können.

Oberhalb der Ebene der Walzen 3, 4 ist eine Laservorrichtung 8 angeordnet. Die Laservorrichtung 8 hat hier nur verkürzt dargestellte Längsschienen 9, 10, die sich parallel zur Ebene der Walzen 3, 4 und oberhalb von diesen parallel zueinander erstrecken und fest mit dem vorrichtungsrahmen verbunden sind. Die Längsschienen 9, 10 haben einen Abstand, der größer ist als die Breite der Formiersiebe 2, die in der Vorrichtung 1 verarbeitet werden sollen.

Auf den Längsschienen 9, 10 ist eine Querschiene 11 in den Richtungen des Doppelpfeils D verschieblich gelagert. Sie erstreckt sich senkrecht zu den Längsschienen 9, 10 und damit parallel zu den Achsen der Walzen 3, 4. Auf der Querschiene 11 gelagert ist über einen Arm 12 ein Laserkopf 13. Er läßt sich auf der Querschiene 11 in den Richtungen des Doppelpfeils E hin und her verfahren. Außerdem kann er um die Längsachse der Querschiene 11 in den Richtungen des Doppelpfeils F verschwenkt werden. Die Bewegung der Querschiene 11 relativ zu den Längsschienen 9, 10 und die Bewegung des Laserkopfes 13 relativ zu der Querschiene 11 wird mittels hier nicht näher dargestellter Motoren bewirkt.

Die Vorrichtung 1 weist eine hier ebenfalls nicht näher dargestellte, programmierbare Steuereinrichtung ähnlich einer CNC-Steuerung auf, mit der die einzelnen Motoren zur Bewegung des Laserkopfes 13 und der Walzen 3, 4 gesteuert werden und der Laserkopf 13 aktiviert werden kann. Im gezeigten Beispiel wird der Laserkopf 13 lediglich in Querrichtung über die Querschiene 11 bewegt. Die Walzen 3, 4 werden angehalten, wenn ein erster Querfaden 7 unterhalb des Laserkopfs 13 zu liegen kommt. Dann wird der Laserkopf 13 längs des Querfadens 7 über die Breite des Formiersiebes 2 geführt und an den zur Verschweißung vorgesehenen Positionen aktiviert. Aufgrund der Laserenergie erwärmt sich der Querfaden 7 in der Oberfläche auf Schmelztemperatur mit der Folge, dass er an Kreuzungspunkten 14 mit den Längsfäden 5 verschmilzt, so dass dort nach dem Erkalten eine Schweißverbindung entsteht.

## Patentansprüche

1. Formiersieb (2) für den Einsatz in der Blattbildungspartie einer Papiermaschine mit oder bestehend aus einem textilen Flächengebilde, das aus Längs- und Querfäden (5, 6) besteht und bei dem zur Erhöhung der Eigenstabilität sich kreuzende Fäden (5, 6, 7) an Kreuzungspunkten (14) miteinander eingebunden sind und bei dem Fäden (5, 7) zusätzlich miteinander verschmolzen sind, **dadurch gekennzeichnet, dass** das Flächengebilde sich kreuzende erste und zweite Fäden (5, 6, 7) aufweist, wobei nur ein Teil der Längs- und/oder Querfäden erste Fäden (7) sind, und die ersten Fäden (7) die Eigenschaft aufweisen, Laserenergie zu absorbieren und durch absorbierte Laserenergie zumindest an der Oberfläche auf Schmelztemperatur bringbar zu sein und dass die zweiten Fäden (5, 6) gar keine oder weniger Laserenergie absorbieren als die ersten Fäden (7), und daß erste und zweite Fäden (5, 7) zumindest an einem Teil ihrer Kreuzungspunkte (14) miteinander verschmolzen sind.

2. Formiersieb nach Anspruch 1, **dadurch gekennzeichnet, dass** die ersten und zweiten Fäden (5, 7) an allen ihren Kreuzungspunkten miteinander verschmolzen sind.

3. Formiersieb nach Anspruch 1 oder 2, **dadurch gekennzeichnet, dass** die Fäden (5, 6, 7) ansonsten nicht miteinander verbunden sind.

4. Formiersieb nach einem der Ansprüche 1 bis 3, **dadurch gekennzeichnet, dass** die ersten Fäden (7) ein Additiv enthalten, das die Absorptionsfähigkeit für Laserlicht bewirkt.

5. Formiersieb nach Anspruch 4, **dadurch gekennzeichnet, dass** das Additiv eine NIR-aktive Substanz oder eine NIR-lichtabsorbierende Substanz ist.

6. Formiersieb nach Anspruch 4 oder 5, **dadurch gekennzeichnet, dass** das Additiv in den ersten Fäden (7) inkorporiert ist und/oder auf die Oberfläche der ersten Fäden (7) aufgetragen ist und/oder an den Kreuzungspunkten zwischen den ersten und zweiten Fäden (5, 7) eingetragen ist.

7. Formiersieb nach einem der Ansprüche 4 bis 6, **dadurch gekennzeichnet, dass** die ersten Fäden Bikomponentenfäden sind, wobei nur eine der beiden Komponenten das Additiv enthält.

8. Förmiersieb nach Anspruch 7, **dadurch gekennzeichnet, dass** die Bikomponentenfäden einen Kern und einen diesen umgebenden Mantel aufweisen, wobei das Additiv nur in dem Mantel enthalten ist.

9. Formiersieb nach einem der Ansprüche 1 bis 8, **dadurch gekennzeichnet, dass** die ersten Fäden Teil der Bindung der Fäden in dem Flächengebilde sind.

10. Formiersieb nach einem der Ansprüche 1 bis 9, **dadurch gekennzeichnet, dass** die ersten Fäden in dem Flächengebilde in einem gleichbleibend regelmäßigen Muster verteilt sind.

11. Formiersieb nach einem der Ansprüche 1 bis 10, **dadurch gekennzeichnet, dass** die ersten Fäden derart eingebunden sind, dass sie nicht bis an die Papierseite des Formiersiebes heranreichen.

12. Formiersieb nach Anspruch 11, **dadurch gekennzeichnet, dass** das Flächengebilde mehrlagig ausgebildet ist und dass die ersten Fäden nur in einer innenliegenden und/oder einer walzenseitigen Lage eingebunden sind.

13. Formiersieb nach einem der Ansprüche 1 bis 12, **dadurch gekennzeichnet, dass** die Fäden zumindest teilweise faserverstärkt sind.

14. Formiersieb nach einem der Ansprüche 1 bis 13, **dadurch gekennzeichnet, dass** das Formiersieb (2) eine endliche Länge mit über eine Naht verbindbaren Stirnkanten hat, wobei im Bereich beider Stirnkanten Querfäden vorhanden sind, die als erste Fäden (7) ausgebildet sind.

15. Formiersieb nach Anspruch 14, **dadurch gekennzeichnet, dass** das Formiersieb (2) bis in den Bereich der Stirnkanten gehende Längsfäden (5) aufweist, die im Bereich der Stirnkanten mit ersten Fäden (7) verschmolzen sind, welche in Querrichtung verlaufen.

16. Verfahren zur Herstellung eines Formiersiebes (2) für den Einsatz in der Blattbildungspartie einer Papiermaschine, bei dem ein textiles Flächengebilde aus sich kreuzenden und miteinander eingebundenen Längs- und Querfäden (5, 6, 7) hergestellt wird und bei dem dann Fäden (5, 7) an Kreuzungspunkten durch Erhitzen auf Schmelztemperatur miteinander verschmolzen werden, **dadurch gekennzeichnet, dass** bei der Herstellung des Flächengebildes erste und zweite Fäden (5, 6, 7) verwendet werden, wobei die ersten Fäden (7) Laserenergie absorbieren können und für die zweiten Fäden (5, 6) solche Fäden verwendet werden, die gar keine oder weniger Laserenergie absorbieren als die ersten Fäden (7), und dass nur für einen Teil der Längs- und/oder Querfäden (5, 6, 7) erste Fäden (7) verwendet werden, und dass erste und zweite Fäden (5, 7) an zumindest einem Teil ihrer Kreuzungspunkte (14) mittels Laserenergie verschmolzen werden.

17. Verfahren nach Anspruch 16, **dadurch gekennzeichnet, dass** die ersten und zweiten Fäden (5, 7) an allen ihren Kreuzungspunkten miteinander verschmolzen werden.

18. Verfahren nach Anspruch 16 oder 17, **dadurch gekennzeichnet, dass** die Fäden (5, 6, 7) ansonsten nicht miteinander verbunden werden.

19. Verfahren nach einem der Ansprüche 16 bis 18, **dadurch gekennzeichnet, dass** erste Fäden (7) verwendet werden, die ein Additiv aufweisen, dass die Absorptionsfähigkeit für Laserlicht bewirkt.

20. Verfahren nach Anspruch 19, **dadurch gekennzeichnet, dass** das Additiv und die Wellenlänge des Lasers aufeinander abgestimmt werden.

21. Verfahren nach einem der Ansprüche 16 bis 20, **dadurch gekennzeichnet, dass** die ersten Fäden (7) so in das Flächengebilde eingebunden werden, dass sie Teil des Bindungsmusters werden.

22. Verfahren nach einem der Ansprüche 16 bis 21, **dadurch gekennzeichnet, dass** die ersten Fäden (7) in dem Flächengebilde in einem gleichbleibend regelmäßigen Muster verteilt werden.

23. Verfahren nach einem der Ansprüche 16 bis 22, **dadurch gekennzeichnet, dass** die ersten Fäden (7) derart eingebunden werden, dass sie nicht bis an die Papierseite des Formiersiebes (2) heranreichen.

24. Verfahren nach Anspruch 23, **dadurch gekennzeichnet, dass** ein mehrlagiges Flächengebilde hergestellt wird und die ersten Fäden (7) nur in einer innen liegenden Lage und/oder einer walzenseitigen Lage vorgesehen werden.

25. Verfahren nach einem der Ansprüche 16 bis 24, **dadurch gekennzeichnet, dass** Fäden (5, 6, 7) aus einem thermoplastischen Material verwendet werden.

26. Verfahren nach einem der Ansprüche 16 bis 25, **dadurch gekennzeichnet, dass** Fäden verwendet werden, die faserverstärkt sind.

27. Verfahren nach einem der Ansprüche 16 bis 26, **dadurch gekennzeichnet, dass** ein Laserstrahl verwendet wird, der eine Leistung von 20 bis 200 W, vorzugsweise 50 bis 150 W hat.

28. Verfahren nach einem der Ansprüche 16 bis 27, **dadurch gekennzeichnet, dass** der Laser zum Verschmelzen der ersten und zweiten Fäden (5, 7) in parallelen Längsspuren über das Formiersieb (2) geführt wird, wobei Laser und Formiersieb (2) relativ zueinander in Längsrichtung des Formiersiebes (2) bewegt werden.

29. Verfahren nach einem der Ansprüche 16 bis 28, **dadurch gekennzeichnet, dass** der Laser zum Verschmelzen der ersten und zweiten Fäden in parallelen Querspuren über das Formiersieb geführt wird.

30. Verfahren nach einem der Ansprüche 16 bis 27, **dadurch gekennzeichnet, dass** der Laser zur Verschmelzung der ersten und zweiten Fäden in diagonaler Richtung über das Formiersieb geführt wird.

31. Verfahren nach Anspruch 30, **dadurch gekennzeichnet, dass** der Winkel zwischen diagonaler Richtung und Querrichtung so gewählt wird, dass die ersten und zweiten Fäden an möglichst vielen Kreuzungspunkten miteinander verschmolzen werden.

32. Verfahren nach Anspruch 30 oder 31, **dadurch gekennzeichnet, dass** der Laser dem Bindungsgrat der Gewebebindung folgt.

33. Verfahren nach einem der Ansprüche 16 bis 27, **dadurch gekennzeichnet, dass** der Laser in spiraligen Spuren über das Formiersieb geführt wird.

34. Verfahren nach einem der Ansprüche 16 bis 33, **dadurch gekennzeichnet, dass** das Formiersieb (2) endlich unter Ausbildung von Stirnkanten hergestellt wird und das Formiersieb bis in den Bereich der Stirnkanten gehende Längsfäden (5) aufweist, die im Bereich der Stirnkanten mit ersten Fäden (7) verschmolzen werden, welche in Querrichtung verlaufen.

35. Verfahren nach Anspruch 34, **dadurch gekennzeichnet, dass** im Bereich der Stirnkanten die ersten Fäden (7) an allen Kreuzungspunkten mit den Längsfäden (5) verschmolzen werden.

36. Verfahren nach einem der Ansprüche 16 bis 35, **dadurch gekennzeichnet, dass** der Laser derart gesteuert wird, dass er an den Kreuzungspunkten (14) von ersten und zweiten Fäden (5, 7) zuerst den zweiten Faden (5) durchstrahlt.

## Claims

1. A forming fabric (2), for use in the sheet-forming section of a paper machine, having or consisting of a textile planar structure which consists of longitudinal and transverse yarns (5, 6) and in which, in order to enhance inherent stability, crossing yarns (5, 6, 7) are engaged into one another at crossing points (14) and in which yarns (5, 7) additionally are fused to one another, **characterized in that** the planar structure comprises intersecting first and second yarns (5, 6, 7), wherein only some of the longitudinal and/or transverse yarns are first yarns (7), the first yarns (7) having the property that they absorb laser energy and can be brought, by absorbed laser energy, to melting temperature at least at the surface, and that the second yarns (5, 6) absorb less laser energy than the first yarns (7) or none at all and that first and second yarns (5, 7) are fused to one another at at least some of their crossing points (14).

2. The forming fabric according to Claim 1, **characterized in that** the first and second yarns (5, 7) are fused to one another at all their crossing points.

3. The forming fabric according to Claim 1 or 2, **characterized in that** the yarns (5, 6, 7) are otherwise not joined to one another.

4. The forming fabric according to one of Claims 1 to 4, **characterized in that** the first yarns (7) contain an additive that imparts the ability to absorb laser light.

5. The forming fabric according to Claim 4, **characterized in that** the additive is an NIR-active substance or an NIR-light-absorbing substance.

6. The forming fabric according to Claim 4 or 5, **characterized in that** the additive is incorporated into the first yarns (7) and/or applied onto the surface of the first yarns (7) and/or introduced at the intersection points between the first and second yarns (5, 7).

7. The forming fabric according to one of Claims 5 to 6, **characterized in that** the first yarns are bicomponent yarns, only one of the two components containing the additive.

8. The forming fabric according to Claim 7, **characterized in that** the bicomponent yarns comprise a core and a casing surrounding it, the additive being contained only in the casing.

9. The forming fabric according to one of Claims 1 to 8, **characterized in that** the first yarns are part of the weave of the yarns in the planar structure.

10. The forming fabric according to one of Claims 1 to 9, **characterized in that** the first yarns are distributed in the planar structure in a consistently regular pattern.

11. The forming fabric according to one of Claims 1 to 10, **characterized in that** the first yarns are engaged in such a way that they do not reach as far as the paper side of the forming fabric.

12. The forming fabric according to Claim 11, **characterized in that** the planar structure is embodied with multiple plies; and the first yarns are engaged only in an internally located ply and/or a roller-side ply.

13. The forming fabric according to one of Claims 1 to 12, **characterized in that** the yarns are at least partially fiber-reinforced.

14. The forming fabric according to one of Claims 1 to 13, **characterized in that** the forming fabric (2) has a finite length with ends joinable via a seam, transverse yarns that are embodied as first yarns (7) being present in the region of both ends.

15. The forming fabric according to Claim 14, **characterized in that** the forming fabric (2) comprises longitudinal yarns (5) that extend into the region of the ends and that in the region of the ends are fused to first yarns (7) that extend in the transverse direction.

16. A method for manufacturing a forming fabric (2) for use in the sheet-forming section of a paper machine, in which method a textile planar structure is manufactured from longitudinal and transverse yarns (5, 6, 7) that cross one another and are engaged into one another, and in which than yarns (5, 7) are fused to one another at crossing points by heating to melting temperature, **characterized in that** first and second yarns (5, 6, 7) are used in the manufacture of the planar structure, in which context the first yarns (7) can absorb laser energy and for the second yarns (5, 6) yarns are used that absorb less laser energy than the first yarns (7) or none at all, and that only some of the longitudinal and/or transverse yarns (5, 6, 7) are first yarns (7) and that first and second yarns (5, 7) are fused by means of laser energy at at least some of their crossing points (14).

17. The forming fabric according to Claim 16, **characterized in that** the first and second yarns (5, 7) are fused to one another at all their crossing points.

18. The method according to Claim 16 or 17, **characterized in that** the yarns (5, 6, 7) are otherwise not joined to one another.

19. The method according to one of Claims 16 to 18, **characterized in that** first yarns (7) are used that contain an additive that imparts the ability to absorb laser light.

20. The method according to Claim 19, **characterized in that** the additive and the wavelength of the laser are coordinated with one another.

21. The method according to one of Claims 16 to 20, **characterized in that** the first yarns (7) are engaged into the planar structure in such a way that they are part of the weave pattern.

22. The method according to one of Claims 16 to 21, **characterized in that** the first yarns (7) are distributed in the planar structure in a consistently regular pattern.

23. The method according to one of Claims 16 to 22, **characterized in that** the first yarns (7) are engaged in such a way that they do not reach as far as the paper side of the forming fabric (2).

24. The method according to Claim 23, **characterized in that** a multiple-ply planar structure is manufactured, and the first yarns (7) are engaged only in an internally located ply and/or a roller-side ply.

25. The method according to one of Claims 16 to 24, **characterized in that** yarns (5, 6, 7) made of a thermoplastic material are used.

26. The method according to one of Claims 16 to 25, **characterized in that** yarns that are fiber-reinforced are used.

27. The method according to one of Claims 16 to 26, **characterized in that** a laser beam that has a power output of 20 to 200 W, preferably 50 to 150 W, is used.

28. The method according to one of Claims 16 to 27, wherein the laser for fusing the first and second yarns (5, 7) is guided over the forming fabric (2) in parallel longitudinal tracks, the laser and forming fabric (2) being moved relative to one another in the longitudinal direction of the forming fabric (2).

29. The method according to one of Claims 16 to 28, **characterized in that** the laser for fusing the first and second yarns is guided over the forming fabric in parallel transverse tracks.

30. The method according to one of Claims 16 to 27, wherein the laser for fusing the first and second threads is guided over the forming fabric in a diagonal direction.

31. The method according to Claim 3, **characterized in that** the angle between the diagonal direction and the transverse direction is selected so that the first and second yarns are fused to one another at as many crossing points as possible.

32. The method according to Claim 30 or 31, **characterized in that** the laser follows the weave ridges of the fabric weave.

33. The method according to one of Claims 16 to 27, **characterized in that** the laser is guided over the forming fabric in spiral tracks.

34. The method according to one of Claims 16 to 33, **characterized in that** the forming fabric (2) is manufactured in finite fashion forming ends, and the forming fabric (2) comprises longitudinal yarns (5) that extend into the region of the ends and that in the region of the ends are fused to first yarns (7) that extend in the transverse direction.

35. The method according to Claim 34, **characterized in that** in the region of the ends, the first yarns (7) are fused to the longitudinal yarns (5) at all crossing points.

36. The method according to one of Claims 16 to 35, **characterized in that** the laser is controlled in such a way that at the crossing points (14) of first and second yarns (5, 7), it first shines through the second yarn (5).

## Revendications

1. Toile de formage (2) conçue pour être utilisée dans la partie de formage de feuilles d'une machine à papier, munie ou constituée d'une structure textile plane qui est composée de fils longitudinaux et transversaux (5, 6), dans laquelle des fils (5, 6, 7) s'entrecroisant sont liés entre eux en des points d'intersection (14), afin d'accroître la stabilité propre, et dans laquelle des fils (5, 7) sont additionnellement solidarisés par fusion, **caractérisée par le fait que** la structure plane comporte des premiers et seconds fils (5, 6, 7) s'entrecroisant, sachant que seule une partie des fils longitudinaux et/ou transversaux représente des premiers fils (7), et que lesdits premiers fils (7) ont la propriété d'absorber de l'énergie laser et de pouvoir être amenés à la température de fusion, au moins à la surface, sous l'effet de l'énergie laser absorbée ; **par le fait que** les seconds fils (5, 6) n'absorbent absolument aucune énergie laser, ou moins d'énergie laser que les premiers fils (7) ; et **par le fait que** des premiers et seconds fils (5, 7) sont solidarisés, par fusion, au moins sur une partie de leurs points d'intersection (14).

2. Toile de formage selon la revendication 1, **caractérisée par le fait que** les premiers et seconds fils (5, 7) sont solidarisés par fusion à tous leurs points d'intersection.

3. Toile de formage selon la revendication 1 ou 2, **caractérisée par le fait que** les fils (5, 6, 7) ne sont, pour le reste, pas reliés les uns aux autres.

4. Toile de formage selon l'une des revendications 1 à 3, **caractérisée par le fait que** les premiers fils (7) renferment un additif générant l'aptitude à absorber de la lumière laser.

5. Toile de formage selon la revendication 4, **caractérisée par le fait que** l'additif est une substance à activité NIR (infrarouges proches) ou une substance à absorption de lumière NIR.

6. Toile de formage selon la revendication 4 ou 5, **caractérisée par le fait que** l'additif est incorporé dans les premiers fils (7) et/ou déposé sur la surface desdits premiers fils (7) et/ou déversé aux points d'intersection entre les premiers et seconds fils (5, 7).

7. Toile de formage selon l'une des revendications 4 à 6, **caractérisée par le fait que** les premiers fils sont des fils à deux composants, seul l'un des deux composants renfermant l'additif.

8. Toile de formage selon la revendication 7, **caractérisée par le fait que** les fils à deux composants comprennent un noyau et une enveloppe entourant ce dernier, l'additif étant renfermé uniquement par ladite enveloppe.

9. Toile de formage selon l'une des revendications 1 à 8, **caractérisée par le fait que** les premiers fils constituent une partie de la liaison des fils dans la structure plane.

10. Toile de formage selon l'une des revendications 1 à 9, **caractérisée par le fait que** les premiers fils sont répartis, dans la structure plane, selon un dessin à régularité constante.

11. Toile de formage selon l'une des revendications 1 à 10, **caractérisée par le fait que** les premiers fils sont intégrés de façon telle qu'ils ne s'étendent pas jusqu'à la face de ladite toile de formage qui se trouve côté papier.

12. Toile de formage selon la revendication 11, **caractérisée par le fait que** la structure plane est de réalisation multicouche ; et **par le fait que** les premiers fils sont intégrés uniquement dans une couche intérieure et/ou dans une couche située côté rouleaux.

13. Toile de formage selon l'une des revendications 1 à 12, **caractérisée par le fait que** les fils sont au moins partiellement renforcés par des fibres.

14. Toile de formage selon l'une des revendications 1 à 13, **caractérisée par le fait que** ladite toile de formage (2) offre une longueur finie à bords frontaux pouvant être reliés par un joint, des fils transversaux, présents dans la région des deux bords frontaux, étant réalisés comme des premiers fils (7).

15. Toile de formage selon la revendication 14, **caractérisée par le fait que** ladite toile de formage (2) présente des fils longitudinaux (5) qui s'étendent jusque dans la région des bords frontaux et sont solidarisés par fusion, dans la région desdits bords frontaux, avec des premiers fils (7) s'étendant dans la direction transversale.

16. Procédé de fabrication d'une toile de formage (2) conçue pour être utilisée dans la partie de formage de feuilles d'une machine à papier, procédé dans lequel une structure textile plane est produite à partir de fils longitudinaux et transversaux (5, 6, 7) s'entrecroisant, liés entre eux, et dans lequel des fils. (5, 7) sont ensuite solidarisés par fusion, en des points d'intersection, par chauffage jusqu'à la température de fusion, **caractérisé par le fait que** des premiers et seconds fils (5, 6, 7) sont utilisés lors de la production de la structure plane, sachant que les premiers fils (7) peuvent absorber de l'énergie laser et qu'on emploie, pour les seconds fils (5, 6), des fils qui n'absorbent absolument aucune énergie laser, ou moins d'énergie laser que lesdits premiers fils (7) ; **par le fait que** des premiers fils (7) sont utilisés uniquement pour une partie des fils longitudinaux et/ou transversaux (5, 6, 7) ; et **par le fait que** des premiers et seconds fils (5, 7) sont solidarisés par fusion, au moyen d'une énergie laser, sur au moins une partie de leurs points d'intersection.

17. Procédé selon la revendication 16, **caractérisé par le fait que** les premiers et seconds fils (5, 7) sont solidarisés par fusion à tous leurs points d'intersection.

18. Procédé selon la revendication 16 ou 17, **caractérisé par le fait que** les fils (5, 6, 7) ne sont, pour le reste, pas reliés les uns aux autres.

19. Procédé selon l'une des revendications 16 à 18, **caractérisé par** l'utilisation de premiers fils (7) renfermant un additif qui génère l'aptitude à absorber de la lumière laser.

20. Procédé selon la revendication 19, **caractérisé par le fait que** l'additif et la longueur d'ondes du laser sont mutuellement coordonnés.

21. Procédé selon l'une des revendications 16 à 20, **caractérisé par le fait que** les premiers fils (7) sont intégrés, dans la structure plane, de façon telle qu'ils deviennent une partie du dessin d'armure.

22. Procédé selon l'une des revendications 16 à 21, **caractérisé par le fait que** les premiers fils sont répartis, dans la structure plane, selon un dessin à régularité constante.

23. Procédé selon l'une des revendications 16 à 22, **caractérisé par le fait que** les premiers fils (7) sont intégrés de façon telle qu'ils ne s'étendent pas jusqu'à la face de la toile de formage (2) qui se trouve côté papier.

24. Procédé selon la revendication 23, **caractérisé par** la production d'une structure plane multicouche, les premiers fils (7) étant prévus uniquement dans une couche intérieure et/ou dans une couche située côté rouleaux.

25. Procédé selon l'une des revendications 16 à 24, **caractérisé par** l'utilisation de fils (5, 6, 7) en une matière thermoplastique.

26. Procédé selon l'une des revendications 16 à 25, **caractérisé par** l'utilisation de fils renforcés par des fibres.

27. Procédé selon l'une des revendications 16 à 26, **caractérisé par** l'utilisation d'un rayon laser présentant une puissance de 20 à 200 W, de préférence de 50 à 150 W.

28. Procédé selon l'une des revendications 16 à 27, **caractérisé par le fait que** le laser est guidé au-dessus de la toile de formage (2) selon des tracés longitudinaux parallèles, afin de solidariser par fusion les premiers et seconds fils (5, 7), le laser et la toile de formage (2) étant animés de mouvements relatifs dans la direction longitudinale de ladite toile de formage (2).

29. Procédé selon l'une des revendications 16 à 28, **caractérisé par le fait que** le laser est guidé au-dessus de la toile de formage selon des tracés transversaux parallèles, afin de solidariser par fusion les premiers et seconds fils.

30. Procédé selon l'une des revendications 16 à 27, **caractérisé par le fait que** le laser est guidé dans la direction diagonale au-dessus de la toile de formage, afin de solidariser par fusion les premiers et seconds fils.

31. Procédé selon la revendication 30, **caractérisé par le fait que** l'angle, entre la direction diagonale et la direction transversale, est choisi de telle sorte que les premiers et seconds fils soient solidarisés, par fusion, en un nombre de points d'intersection le plus grand possible.

32. Procédé selon la revendication 30 ou 31, **caractérisé par le fait que** le laser suit le coefficient d'armure du tissu.

33. Procédé selon l'une des revendications 16 à 27, **caractérisé par le fait que** le laser est guidé au-dessus de la toile de formage selon des tracés spiroïdaux.

34. Procédé selon l'une des revendications 16 à 33, **caractérisé par le fait que** la toile de formage (2) est produite en une réalisation finie, avec formation de bords frontaux, ladite toile de formage comportant des fils longitudinaux (5) qui s'étendent jusque dans la région desdits bords frontaux et sont solidarisés par fusion, dans la région desdits bords frontaux, avec des premiers fils (7) s'étendant dans la direction transversale.

35. Procédé selon la revendication 34, **caractérisé par le fait que** les premiers fils (7) sont solidarisés par fusion, avec les fils longitudinaux (5), en tous les points d'intersection dans la région des bords frontaux.

36. Procédé selon l'une des revendications 16 à 35, **caractérisé par le fait que** le laser est commandé de façon telle qu'il traverse tout d'abord le second fil (5) aux points d'intersection (14) entre des premiers et seconds fils (5, 7).
